# EUROPEAN PATENT APPLICATION

(11) **EP 4 578 558 A1**
(43) Date of publication of application: **02.07.2025**
(21) Application number: 23461705.8
(22) Date of filing: 29.12.2023
(51) Int. Cl.: B05B 7/14, B28C 5/02, E04F 21/08, E04G 21/04

(54) **METHOD AND DEVICE FOR WALLS CONSTRUCTION AND LAYING CLAY-STRAW PLASTER**

(30) Priority: 28.12.2023 PL 44733623
(71) Applicant: Kingdomy sp. z o.o., 30-812 Krakow (PL)
(72) Inventor: Pociecha, Daniel, 33-394 Chomranice (PL); Kwiatkowski, Michal, 30-668 Krakow (PL); Nowosielski, Maciej, 30-817 Krakow (PL); Dutka, Jacek, 33-394 Chomranice (PL); Kwiatkowski, Maciej, 30-741 Krakow (PL); Przybyla, Szymon, 43-430 Piersciec (PL)
(74) Representative: Czarnik, Maciej

(57) **Abstract**

The invention provides a method for erecting clay-straw walls and laying clay-straw plasters, which comprises spraying the surfaces simultaneously with a straw stream and a clay mixture stream, the cone of clay mixture spray being equal to the cone of straw stream outflow and the clay mixture stream intersecting the straw stream at an angle of 30-45°. The object of the invention also comprises a set of spray tips for erecting clay-straw walls and laying clay-straw plasters.

## Description

The object of the invention is a method and device for clay-straw walls construction and for laying clay-straw plaster.

Clay and straw are well-known building materials, used for the construction of building walls and the covering of building walls with plaster. Straw for walls construction, usually rye, wheat, wheat-rye, oat, barley or mixed straw from these cereals, is compacted into cubic blocks. These blocks range in density from about 90-110 kg/m³, up to 200 kg/m³, which is influenced by the fineness of the material before pressing, with the lower fineness of the material having a positive effect on the strength of the blocks, which is an important factor especially for structures where the straw blocks are load-bearing elements. These blocks are produced in typical dimensions ranging from approximately 36 × 49 × 50 - 130 cm to 80-120 × 70-130 × 80-300 cm. The buildings are constructed from blocks in one of two typical technologies. In the so-called load-bearing straw system, the walls are built in by stacking straw cubes, and the weight of the roof or ceiling is transferred to the foundation without significant help from other supports. It is a simple and cost-effective technology that allows buildings of limited size to be constructed due to the mechanical properties of straw under load. Straw-block technology with frame construction uses an additional support system to take up roof loads and stabilise the walls. The straw blocks here do not have a load-bearing function, but serve only to fill the spaces between the construction elements and also as thermal insulation. The support system can be made of timber, either in the form of frames or framing, as well as prefabricated timber panel structures, glued laminated timber or logs. The walls are then plastered. The plaster reinforces the surface of the cubes, smoothens it and, in combination with the reinforcement mesh and properly made joints, ensures airtightness and fire resistance. Usually, clay plasters are made as internal plasters because they are effective in balancing the humidity in the rooms. As external plasters, clay plasters or lime plasters are also used on weather-protected surfaces, and clay mortar is also used on surfaces with little exposure to precipitation. A common technique is to spray with a spraying unit and then smooth the surface of the wall with a trowel to press the protruding straw stalks into the plaster.

Straw blocks are also used as an insulating layer placed in front of the actual solid wall made of, for example, glued laminated or cross-laminated timber. The straw blocks are fixed to the wall with string and eye screws. They can be plastered or covered with boarding. Wall structures insulated with straw blocks can be used in the construction of most single- and two-storey buildings: single-family houses, farm and utility buildings, as well as public buildings.

The clay-straw mixtures are also used as plaster mixtures to be applied by hand or with plastering units in one or several layers as a base for finishing plasters. The addition of straw and the varying grain size after treatment makes it possible to achieve a structured, rough surface with a decorative function, which is why such plasters are also used as the final layer in a single-layer system, i.e. without a finishing plaster layer.

The solution according to the invention makes it possible to use mixtures of clay and straw to construct the walls of buildings and to lay plaster. The construction process using this solution can be carried out quickly as there is no need for formwork to support the pressed straw blocks, while also being carried out accurately due to the ability to precisely fill voids with the clay-straw mixture and to eliminate thermal bridges. In addition, the solution makes it easy to shape the sprayed layer (it does not have to correspond to the dimensions or times the dimensions of a single straw block) and thus to construct buildings according to non-standard architectural designs, and provides the possibility to regulate the proportion of clay and straw in the course of work in order to obtain specific properties of the layer.

In accordance to the invention, the clay mixture is fed under pressure through a hose to the clay mixture spray tip and the straw is fed under pressure to the straw spray tip, where it is struck by the clay mixture jet. The spray cone of the clay mixture is equal to the outflow cone of the straw stream, and the clay mixture stream crosses the straw stream at an angle of 30-45°. The straw is mixed with the clay mixture at the outlet of the mixing chamber of the straw spray tip, and at the same time the mixture is aerated, after which it settles and dries as a layer of plaster or clay-straw wall.

Straw is especially wheat, spelt or rye straw, or a mixture thereof, crushed to a fraction of no more than 5 cm (maximum stalk length), with a bulk density of 60-150 kg/m³ and a moisture content of up to 8%. A clay mixture is a clay mineral, either cohesive or constituting hydrated aluminosilicates, usually referred to as clay, in powdered or granular form mixed with a solvent, which is water, in the form of a clay slurry or pure water, up to 33% weight of dry substance. The clay mixture may comprise an admixture of cement at 5% weight of dry substance, especially in the case of external plasters, to increase the plaster's resistance to moisture and water, or an admixture of lime at 5% weight of dry substance, especially in the case of internal plasters, to increase the plaster's resistance to fungi.

Spraying is carried out on warm, dry days (air temperature above 5°C, humidity up to 55%). Spraying is carried out in layers, with a maximum layer thickness of up to 10 cm applied at a time, and the next layer is applied after the previous layer has dried, or 48 hours after it has been applied for a clay mixture with cement or lime admixture. The maximum layer thickness for plaster should not exceed 5 cm.

The mixture can be sprayed onto the surface of, for example, a wall in order to apply the plaster, and when the wall is constructed , it is deposited in temporary closed formwork made of, for example, OSB panels, or in permanent closed formwork made of, for example, wood panelling. Once the spraying has been carried out and the wall has dried, the temporary formwork is removed and the target wall finish is carried out, e.g. the application of plaster. The target formwork also acts as a finish for the wall face.

Straw and clay mixture spraying is carried out using a spray tip set comprising interchangeable straw spray tips having each a body and a straw feed channel connected by a pipe to a blower and straw hopper, with a clay mixture spray tip located on the top side of the straw spray tip. This tip has a spray axis that crosses the straw outflow axis of the straw spray tip at an angle of 30-45°, and the straw spray tips each have a through mixing chamber with a cutout in the top wall of the mixing chamber corresponding to the spray cone of the clay mixture spray tip. Preferably, the kit comprises three types of straw spray tips differing in the shape of the straw outlet from the mixing chamber.

The tip of the first type has a mixing chamber outlet shaped like a cylinder or cone expanding in the direction of the straw flow. The tip is designed for filling wall formwork with a dry mixture, i.e. a mixture in which straw is mixed in the following ratio: a large amount of straw, 1.4-1.6 m³ to a small, up to 40 litres, amount of clay mixture, or for filling walls with a porous mixture, i.e. a mixture in which straw is mixed at a ratio of 0.8-1.2 m³ to 40 litres of clay mixture, i.e. a straw to clay mixture ratio of approx. 20:1 - 30:1 by volume. Mixing at this ratio results in the mixture being sufficiently aerated so that the wall has a lower dead weight, less material is used, cost savings are achieved and a lower thermal conductivity coefficient is achieved. This tip can also be used to plaster large areas.

The tip of the second type has a cylindrical mouth of the mixing chamber transitioning conically into an ellipse- or oval-shaped outlet with two axes of symmetry extending in line with the plane of the spray. This tip is designed for filling wall formwork with porous mix. It can also be used to apply the dry mix in hard-to-reach areas (corners, lintels, pillars, pockets and cavities), as well as for plastering using the wet mix. The wet mix is one in which straw is mixed with the clay mix in a ratio: a small amount of straw, no more than 0.1 m³, is mixed with about 40 litres of clay mix, so in a volume ratio of straw to clay mix of about 2:1, and with a smaller proportion of straw it may even be 1:1 or 1:2. This mixture is intended for the initial layer of plaster, acting as a reinforcement for the plaster to prevent it from cracking.

The tip of the third type has the mouth of the mixing chamber in the shape of a cylinder of diameter p transitioning conically into a circular outlet of diameter q such that p < q. This tip is designed for spot filling narrow spaces with dry or semi-dry mix, and for spot filling plaster defects.

The spray tip of the clay mixture and the spray tips of the straw can be fixed in the working position relative to each other using essentially any attachment. Preferably , the clay mixture spray tip is attached to the straw spray tips by a spring clamp forming part of the straw spray tip body, and the clay mixture spray tip is press-fitted into this clamp. This solution makes it possible to replace the tips in the course of work.

Optionally, the clay mixture spray tip comprises a clay mixture spray tip with a clay mixture supply line and an air supply port.

Optionally, the straw spray tips have handle slots and handles for positioning the set in the working position.

The object of the invention is illustrated by the following examples of the invention and the drawings, in which the individual figures show:

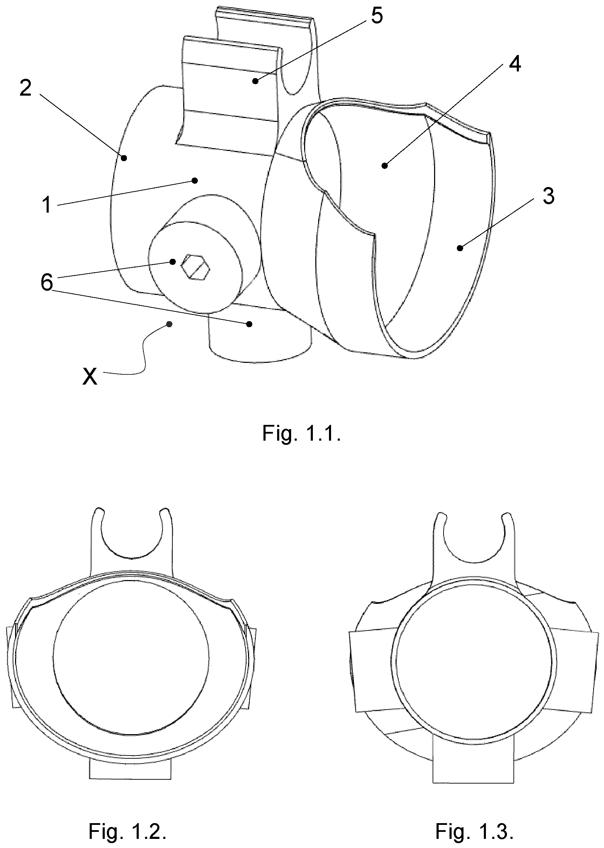

- Fig. 1.1.: straw spray tip type X in axonometric view
- Fig. 1.2.: straw spray tip type X in front view
- Fig. 1.3.: straw spray tip type X as seen from the straw inlet

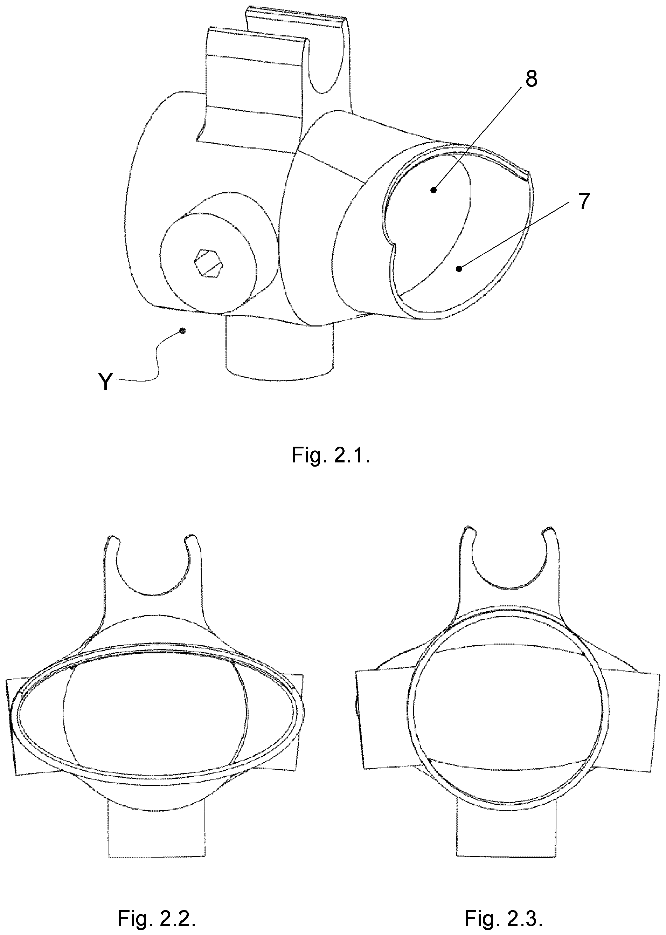

- Fig. 2.1.: straw spray tip type Y in axonometric view
- Fig. 2.2.: straw spray tip type Y in front view
- Fig. 2.3.: straw spray tip type Y as seen from the straw inlet

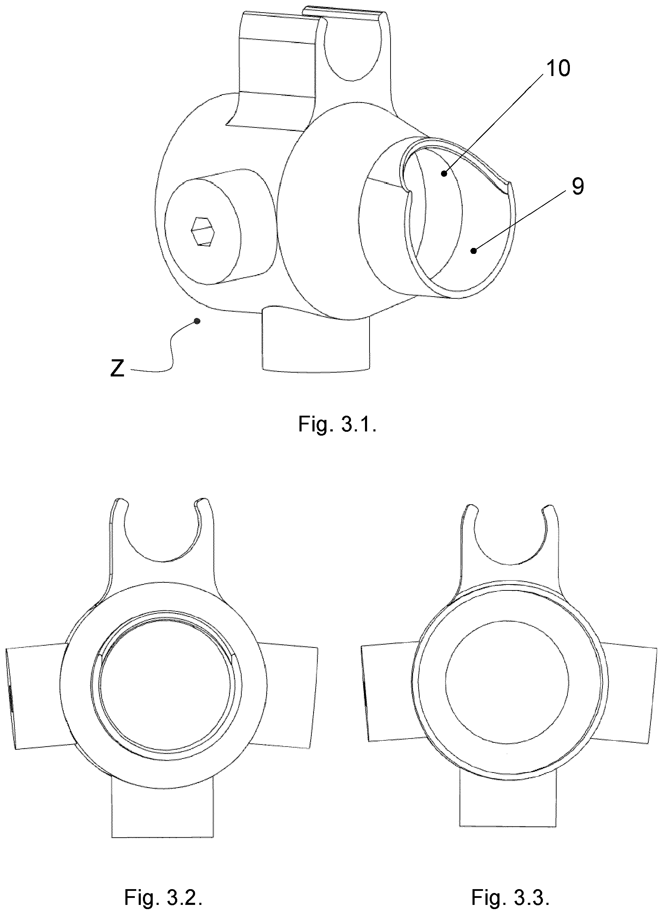

- Fig. 3.1.: straw spray tip type Z in axonometric view
- Fig. 3.2.: straw spray tip type Z in front view
- Fig. 3.3.: straw spray tip type Z as seen from the straw inlet

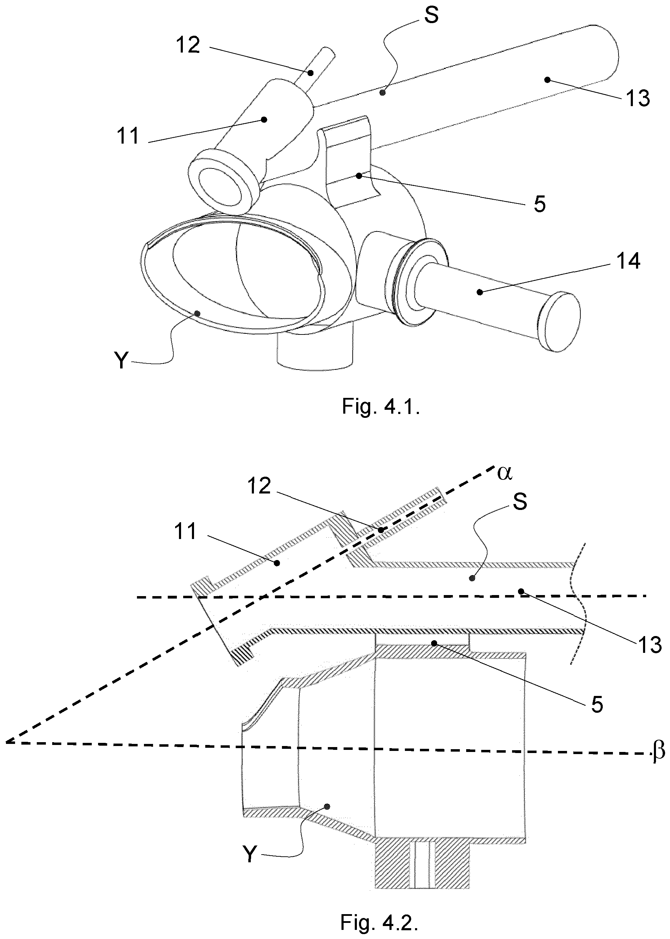

- Fig. 4.1.: straw spray tip type Z in combination with S clay mixture spray tip in axonometric view
- Fig. 4.2: straw spray tip type Z in combination with spray tip of clay mixture S in vertical section
In an example of the implementation of the method according to the invention, the shredded straw is fed from a big-bag type container to a blowing fan, from where it is pumped through a spiro tube to the straw spray head. The clay is pre-mixed with lime and cement using a concrete mixer and fed with water into Bapro plastering unit, from where the hydrated clay is fed into the clay mix spray head. Spraying is carried out with a porous mix, for open formwork, as well as with a dry mix and a wet mix when required. Depending on the type of head used and the type of mixture, the optimum spray parameters for the insulation work were determined. These data are summarised in Table 1. The spraying power presented in the table indicates the spraying power of the plastering unit Bapro Type One Strong Max with a maximum output of 40 l/min. Straw spray tips X, Y and Z were used with the dimensions shown in the table.

**Table 1. Summary of spray parameters**

| | X-piece | Y-piece | Z-piece |
|---|---|---|---|
| Width | 142 cm | 142 cm | 64 cm |
| Height | 120 cm | 64 cm | 64 cm |
| Cross-sectional area of the tip opening | 134 cm² | 71 cm² | 32 cm² |
| | | | |

| Dry mix | | | |
|---|---|---|---|
| Spraying power of the clay mixture | 90 % | 50 % | 20 % |
| Straw blowing power | 1.4-1.6m³/min | 0.6 - 0.8 m³/min | 0.3 - 0.5 m³/min |
| | | | |
| Porous mixture | | | |
| Spraying power of the clay mixture | 90 % | 50 % | 20 % |
| Straw blowing power | 0.8 - 1.2 m³ / min | 0.3 - 0.5 m³/min | 0.1 - 0.2 m³/min |
| | | | |

| Wet mix | | | |
|---|---|---|---|
| Spraying power of the clay mixture | 90 % | 50 % | 20 % |
| Straw blowing power | max 0.1 m³ / min | max 0.5 m³/min | max 0.02 m³/min |

A set of interchangeable X, Y, Z spray tips were used for the spray, having each body 1 and inflow channel 2 with a straw outflow axis β and on the top side of the X, Y, Z straw spray tips having each clay mixture spray tip S with a spray axis α crossing the straw outflow axis β at 45°. Straw spray tips X, Y, Z each have a through mixing chamber 3, 7, 9 with a cutout 4, 8, 10 in the top wall of the mixing chamber 3, 7, 9 corresponding to the spray cone of the clay mixture spray tip S. In this set of spray tips the mixing chamber 3 of the straw spray tip X has an outlet shaped like a cylinder or a cone expanding in the direction of movement of the straw stream, mixing chamber 7 of straw spray tip Y has an outlet shaped like a cylinder transforming conically into an outlet shaped like an oval with two axes of symmetry extending in line with the plane of the spray, and a mixing chamber 10 of the straw spray tip Z has an outlet in the shape of a cylinder with a cross-sectional area p tapering conically into a circular outlet opening with a cross-sectional area q such that p = 60 % q.
The spray tip of the clay mixture S is in each case attached to the straw spray tips X, Y, Z by a spring clamp 5. The clay mixture spray tip S in each case comprises a clay mixture spray tip 11 with a clay mixture supply line 13 and an air supply port 12. Straw spray tips X, Y, Z have handle slots 6 and handles 14.

### List of designations

- X, Y, Z: straw spray tips
- S: clay mixture spray tip

- 1: body
- 2: inflow channel
- 3: Mixing chamber of the straw spray tip X
- 4: cutout of the straw spray tip X
- 5: spring clamp
- 6: handle slots
- 7: mixing chamber of the straw spray tip Y
- 8: cutout of the straw spray tip Y
- 9: mixing chamber of the straw spray tip Z
- 10: cutout of the straw spray tip Z
- 11: clay mixture spray tip
- 12: air supply port
- 13: clay mixture supply line
- 14: handles

- α: spray axis of the clay mixture
- β: straw outflow axle

## Claims

1. A method for clay-straw walls construction and laying clay-straw plasters, **characterised in that** spraying the surfaces is done simultaneously with a straw stream and a clay mixture stream, the cone of clay mixture spray being equal to the cone of straw stream discharge and the clay mixture stream intersecting the straw stream at an angle of 30-45°.

2. A set of spray tips for constructing clay-straw walls and laying clay-straw plasters **characterized in that** it comprises interchangeable straw spray tips X, Y, Z having each a body 1 and an inflow channel 2 with a straw outflow axis β and on the upper side of the straw spray tips X, Y, Z clay mixture spray tip S having a spray axis α intersecting with the straw outflow axis β at an angle of 30-45°, and the straw spray tips X, Y, Z each having a through mixing chamber 3, 7, 9 with a cutout 4, 8, 10 in the top wall of the mixing chamber 3, 7, 9 corresponding to the spray cone of the clay mixture spray tip S.

3. The set of spray tips according to claim 2 **characterized in that** the mixing chamber 3 of the straw spray tip X has an outlet shaped like a cylinder or a cone expanding in the direction of movement of the straw stream, mixing chamber 7 of straw spray tip Y has an outlet shaped like a cylinder transforming conically into an outlet shaped like an ellipse or oval with two axes of symmetry extending in line with the plane of the spray, and a mixing chamber 10 of the straw spray tip Z has an outlet in the shape of a cylinder with a cross-sectional area p tapering conically into a circular outlet opening with a cross-sectional area q such that p < q, preferably p = 60 % q.

4. The set of spray tips according to any of claims 2 or 3 **characterized in that** the spray tip of the clay mixture S is attached to the straw spray tips X, Y, Z by a spring clamp 5.

5. The set of spray tips according to any of claims 2 to 4 **characterized in that** the clay mixture spray tip S comprises a clay mixture spray tip 11 with a clay mixture supply pipe 13 and an air supply port 12.

6. The set of spray tips according to any of claims 2 to 5 **characterized in that** the straw spray tips X, Y, Z have handle slots 6 and handles 14.
